# NEUE EUROPÄISCHE PATENTSCHRIFT

(11) **EP 3 265 358 B2**
(45) Veröffentlichungstag und Bekanntmachung des Hinweises auf die Entscheidung über den Einspruch: **18.10.2023**
(45) Hinweis auf die Patenterteilung: 30.12.2020
(21) Anmeldenummer: 16706869.1
(22) Anmeldetag: 29.02.2016
(51) Int. Cl.: B61D 1/06, B61D 3/02, B61C 3/02, B61C 17/06

(54) **SCHIENENFAHRZEUG, VERFAHREN ZUM ANTREIBEN EINES SCHIENENFAHRZEUGS SOWIE VERFAHREN ZUR HERSTELLUNG EINES SCHIENENFAHRZEUGS**
RAIL VEHICLE, METHOD FOR DRIVING A RAILWAY VEHICLE AND A METHOD FOR THE PRODUCTION OF A RAIL VEHICLE
VÉHICULE FERROVIAIRE, PROCÉDÉ D'ENTRAÎNEMENT D'UN VÉHICULE FERROVIAIRE ET PROCÉDÉ DE FABRICATION D'UN VÉHICULE FERROVIAIRE

(30) Priorität: 05.03.2015 EP 15157777; 01.10.2015 EP 15187957
(43) Veröffentlichungstag der Anmeldung: 10.01.2018
(73) Patentinhaber: Stadler Rail AG, 9565 Bussnang (CH)
(72) Erfinder: FORRER, Daniel, 9552 Bronschhofen (CH)
(74) Vertreter: Hepp Wenger Ryffel AG
(86) Internationale Anmeldenummer: PCT/EP2016/054199
(87) Internationale Veröffentlichungsnummer: WO 2016/139167

(56) Entgegenhaltungen:
- EP-A1- 1 024 070
- EP-A1- 2 189 320
- WO-A1-2009/021831
- WO-A2-2004/035366
- WO-A2-2013/160135
- DE-A1- 10 248 438
- DE-A1-102011 082 516
- Offenkundige Vorbenutzung SBB RABe 514

## Beschreibung

Die Erfindung betrifft ein Schienenfahrzeug, ein Verfahren zum Antreiben eines Schienenfahrzeugs sowie ein Verfahren zur Herstellung eines Schienenfahrzeuges gemäss dem Oberbegriff der unabhängigen Ansprüche.

Es ist bei Schienenfahrzeugen bekannt, Radeinheiten über Antriebseinrichtungen anzutreiben, während Komponenten der Antriebseinrichtungen verteilt im Wagenkasten oder oberhalb des Wagenkastens angeordnet sind.

Solche Schienenfahrzeuge sind z.B. von der DE-102011082516-A1 oder von der WO-2013160135-A2 bekannt.

Aus der WO 2004/035366 ist beispielsweise ein Wagenkasten mit einem zentralen Transformator für mehrere Radeinheiten bekannt. Weiterhin sind Doppelstocktriebzüge mit zwei Transformatoren an einem Wagenende und zwei Stromrichtern am anderen Wagenende bekannt. Weiterhin können die Stromrichtermodule auch im Dachraum vorgesehen sein.

Aus der EP 1 963 157 ist eine Antriebseinrichtung bekannt, bei der Transformator und Stromrichter oberhalb einer ersten Radeinheit angeordnet sind sowie ein zweiter Transformator und ein zweiter Stromrichter oberhalb einer zweiten Radeinheit. Nachteilig bei den bekannten Schienenfahrzeugen ist einerseits eine hohe Achslast bei viel Leistung und eine ungleichmässige Gewichtsverteilung bei weniger Leistung sowie insbesondere bei Anordnung von schwerem Gerät wie Transformatoren oder Stromrichtern im Dach von Triebfahrzeugen eine mangelnde Seitenwindstabilität.

Es ist daher Aufgabe der vorliegenden Erfindung ein Schienenfahrzeug, ein Verfahren zum Antreiben eines Schienenfahrzeuges sowie ein Verfahren zur Herstellung eines Schienenfahrzeugs zu schaffen, welches die Nachteile des Standes der Technik vermeidet und insbesondere ein Schienenfahrzeug, im Verfahren zum Antreiben eines Schienenfahrzeuges sowie ein Verfahren zur Herstellung eines Schienenfahrzeuges zu schaffen, die eine möglichst ausgeglichene Gewichtsverteilung bei modularer Herstellbarkeit sowie die geforderte Seitenwindstabilität bei wenig Leistung aufweisen.

Die Aufgabe wird durch ein Schienenfahrzeug nach Anspruch 1, ein Verfahren zum Antreiben eines Schienenfahrzeuges nach Anspruch 8 sowie ein Verfahren zur Herstellung eines Schienenfahrzeuges nach Anspruch 10 gelöst.

Insbesondere wird die Aufgabe durch ein Schienenfahrzeug gelöst, welches zumindest ein Wagenkasten umfasst. Der Wagenkasten weist zwei Wagenkastenenden auf und im Bereich der Wagenkastenenden ist der Wagenkasten jeweils auf einer Radeinheit abgestützt. Zumindest eine Radeinheit ist antreibbar ausgebildet. Das Schienenfahrzeug umfasst weiterhin eine Antriebsanordnung, wobei die Antriebsanordnung zumindest eine Transformatoreinheit, zumindest eine Traktionsmotoreinheit und zumindest eine Stromrichtereinheit umfasst. Eine primäre Transformatoreinheit und eine primäre Stromrichtereinheit sind im Bereich der ersten Radeinheit angeordnet. Die primäre Transformatoreinheit und die primäre Stromrichtereinheit sind mit der zweiten Radeinheit derartig verbunden, dass die primäre Traktionsmotoreinheit der zweiten Radeinheit durch die primäre Transformatoreinheit und die primäre Stromrichtereinheit antreibbar sind.

Nicht-erfindungsgemäss ist eine primäre Transformatoreinheit im Bereich der ersten Radeinheit angeordnet. Die primäre Transformatoreinheit ist mit einer primären Stromrichtereinheit, angeordnet im Bereich der zweiten Radeinheit und einer primären Traktionsmotoreinheit, angeordnet im Bereich der zweiten Radeinheit, derartig verbunden, dass die primäre Traktionsmotoreinheit im Bereich der zweiten Radeinheit durch die primäre Transformatoreinheit im Bereich der ersten Radeinheit und die primäre Stromrichtereinheit im Bereich der zweiten Radeinheit antreibbar sind.

Ein derartiges Schienenfahrzeug weist eine optimierte Gewichtsverteilung auf, da Traktionsmotoreneinheit und Transformatoreinheit sowie Stromrichtereinheit voneinander getrennt sind. Weiterhin ist der Schwerpunkt der angetriebenen Radeinheit sehr tief, was vorteilhaft ist, sobald es sich um einen Triebzug handelt und eine optimierte Seitenwindstabilität gefordert ist.

Die Transformatoreinheit gemäss der Erfindung kann bei einer Gleichstromversorgung (DC) durch eine Drosseleinheit ersetzt werden.

Eine Traktionsmotoreinheit gemäss der Erfindung kann einen oder mehreren Motoren umfassen, bevorzugt umfasst eine Traktionsmotoreinheit zwei Traktionsmotoren.

Insbesondere ist die Stromrichtereinheit mit der Traktionsmotoreinheit über eine Kabelvorrichtung verbunden, die den Abstand zwischen der ersten und der zweiten Radeinheit überbrückt. Die Kabelvorrichtung kann als Vormontageeinheit ausgebildet sein. Bevorzugt handelt es sich bei der Kabelvorrichtung um ein dreiphasiges Kabel. Weiterhin ist auch die Stromrichtereinheit bevorzugt mit einer weiteren Kabelvorrichtung mit der Transformatoreinheit verbunden.

Eine Radeinheit kann entweder ein konventionelles Drehgestell oder ein Jakobsdrehgestell sein.

Das Schienenfahrzeug kann eine Längsachse umfassen und eine primäre Transformatoreinheit kann auf einer ersten Seite der Längsachse angeordnet sein und die primäre Stromrichtereinheit auf einer zweiten Seite der Längsachse angeordnet sein.

Somit lässt sich eine im Wesentlichen gleichmässige Gewichtsverteilung beidseitig der Längsachse erreichen.

Der Wagenkasten kann an einem zweiten Wagenkastenende einen Führerstand umfassen, und die zweite Radeinheit kann im Bereich des zweiten Wagenkastenendes angeordnet sein.

Da ein Führerstand ein hohes Gewicht aufweist, ist durch die Anordnung von Führerstand und Traktionsmotoreinheit auf der zweiten Seite sowie Transformatoreinheit und Stromrichtereinheit auf der anderen Seite der Wagenkasteneinheit eine möglichst ausgeglichene Gewichtsverteilung möglich.

Alternativ kann der Führerstand an einem ersten Wagenkastenende angeordnet sein und die erste Radeinheit kann im Bereich des ersten Wagenkastenendes angeordnet sein.

Da insbesondere die elektronischen Systeme im Führerstand wie beispielsweise die Zugsicherungssysteme anfällig für Störströme sind, ist es vorteilhaft Führerstand und Traktionsmotoreinheit möglichst weit entfernt voneinander anzuordnen. Folglich kann bei der vorliegenden Ausbildung flexibel auf die einzelnen Anforderungen wie Seitenwindstabilität und Störstromanfälligkeit eingegangen werden und der Führerstand so optimal plaziert werden.

Eine sekundäre Stromrichtereinheit und eine sekundäre Transformatoreinheit können im Bereich der zweiten Radeinheit angeordnet sein.

Ein sekundärer Stromrichter und ein sekundärer Transformator führen zu einer höheren Leistung des Schienenfahrzeugs. Die Anordnung im Bereich der zweiten Radeinheit ermöglicht eine möglichst ausgeglichene Gewichtsverteilung. Weiterhin ist das Schienenfahrzeug modular herstellbar und weist in beiden Varianten, mit einer Antriebseinheit oder mit zwei Antriebseinheiten, eine möglichst gleichmässige Gewichtsverteilung auf.

Nicht erfindungsgemäss kann eine sekundäre Stromrichtereinheit im Bereich der ersten Radeinheit und eine sekundäre Transformatoreinheit kann im Bereich der zweiten Radeinheit angeordnet sein.

Ein sekundärer Stromrichter und ein sekundärer Transformator führen zu einer höheren Leistung des Schienenfahrzeugs. Die Anordnung verteilt auf die erste und zweite Radeinheit ermöglicht eine möglichst ausgeglichene Gewichtsverteilung. Weiterhin ist das Schienenfahrzeug modular herstellbar und weist in beiden Varianten, mit einer Antriebseinheit oder mit zwei Antriebseinheiten, eine möglichst gleichmässige Gewichtsverteilung auf.

Der Begriff sekundär im Sinne dieser Anmeldung bedeutet keine Gewichtung gegenüber dem Begriff primär, sondern dient ausschliesslich der Unterschei. dung. Sekundärer Stromrichter bzw. sekundärer Transformator können den primären Stromrichter bzw den primären Transformator entsprechen oder auch mehr bzw. weniger Leistung aufweisen. Des Weiteren bedeutet sekundär, dass ein zweiter Stromrichter bzw. Transformator bzw. Traktionsmotor an einem Wagenkasten ausgebildet ist. Sekundär bezieht sich nicht ausschliesslich auf eine Radeinheit.

Der sekundäre Stromrichter und der sekundäre Transformator können eine sekundäre Traktionsmotoreinheit im Bereich der ersten Radeinheit antreiben.

Somit lässt sich eine möglichst gleichmässige Gewichtsverteilung über den Wagenkasten erzielen.

Der Wagenkasten kann als Doppelstockwagenkasten ausgebildet sein.

Insbesondere bei Doppelstockwagen sind die Achslasten sowie die Seitenwindstabilität immer kritisch, sodass die gleichmässige Gewichtsverteilung durch Anordnung der Antriebseinheiten insbesondere in einem Doppelstockwagen zum Tragen kommt.

Die Antriebsanordnung kann eine Energiespeichereinheit umfassen, insbesondere bei Gleichstromversorgung oder bei einem Dieselmotor als Energiequelle.

Da auch eine Energiespeichereinheit relativ viel Gewicht aufweist, wird die Anordnung der Energiespeichereinheit an die Gegebenheiten im Wagenkasten angepasst.

Eine Energiespeichereinheit führt zu der Möglichkeit Bremsenergie rückzugewinnen und zu speichern und somit zu einer ökonomischeren Betriebsweise des Schienenfahrzeuges.

Zur Lösung der Aufgabe führt weiterhin ein Verfahren zum Antreiben eines Schienenfahrzeugs, insbesondere wie vorhergehend beschrieben, welches einen Wagenkasten mit zwei Wagenkastenenden umfasst. Im Bereich der Wagenkastenenden ist jeweils eine Radeinheit angeordnet. Eine primäre Traktionsmotoreinheit einer zweiten Radeinheit an einem zweiten Wagenkastenende wird durch eine primäre stromrichtereinhert und eine primäre Transformatoreinheit an einem ersten Wagenkastenende im Bereich der ersten Radeinheit mit Energie versorgt.

Eine derartige Energieversorgung führt zu einer möglichst gleichmässigen Verteilung der Achslasten im Schienenfahrzeug.

Eine sekundäre Traktionsmotoreinheit einer ersten Radeinheit an einem ersten Wagenkastenende kann durch eine sekundäre Stromrichtereinheit und eine sekundäre Transformationseinheit am zweiten Wagenkastenende mit Energie versorgt werden.

In einer nicht erfindungsgemässen Ausführungsform kann eine sekundäre Traktionsmotoreinheit im Bereich einer ersten Radeinheit an einem ersten Wagenkastenende durch eine sekundäre Stromrichtereinheit im Bereich der ersten Radeinheit und eine sekundäre Transformationseinheit am zweiten Wagenkastenende im Bereich der zweiten Radeinheit mit Energie versorgt werden.

Eine derartige Anordnung führt zu einem modularen Prinzip, bei dem in jeder Ausgestaltung die Achslasten gleichmässig verteilt sind.

Zur Lösung der Aufgabe führt weiterhin ein Verfahren zur Herstellung eines Schienenfahrzeuges, insbesondere eines Schienenfahrzeuges wie vorhergehend beschrieben. Das Verfahren umfasst die Schritte
- Bereitstellen eines Wagenkastens mit zwei Wagenkastenenden, wobei jedes Wagenkastenende auf einer Radeinheit abgestützt ist,
- Bereitstellen einer primären Stromrichtereinheit und einer primären Transformationseinheit an einem ersten Wagenkastenende im Bereich der ersten Radeinheit,
- Bereitstellen zumindest einer primären Traktionsmotoreinheit an einer zweiten Radeinheit und zweiten Wagenkastenende,
- Verbinden der primären Transformationseinheit mit der primären Stromrichtereinheit,
- Verbinden der primären Stromrichtereinheit mit der zumindest einen primären Traktionsmotoreinheit an der zweiten Radeinheit.

Bevorzugt wird die primäre Stromriertereinheit mit der zumindest einen primären Traktionsmotoreinheit über ein dreiphasiges Kabel verbunden.

Ein derartiges Verfahren ermöglicht die gleichmässige Verteilung der Achslasten im Schienenfahrzeug bereits bei der Herstellung.

Das Verfahren kann weitergehend die Schritte
- Bereitstellen einer sekundären Stromricttereinheit und einer sekundären Transformatoreinheit an einem zweiten Wagenkastenende im Bereich der zweiten Radeinheil,
- Bereitstellen zumindest einer sekundären Traktionsmotoreinheit an einer ersten Radeinheit am ersten Wagenkastenende,
- Verbinden der sekundären Transformationseinheit mit der sekundären Stromrichtereinheit,
- Verbinden der sekundären Stromrichtereinheit mit der zumindest ein sekundärem Traktionsmotoreinheit an der ersten Radeinheit,
umfassen.

Ein derartiges Herstellungsverfahren ermöglicht die modulare Herstellung eines Schienenfahrzeuges, in welchem die Achslasten immer gleichmässig verteilt sind.

Die Verbindungen im Herstellverfahren werden durch Kabel erstellt, insbesondere die Verbindung zwischen Stromrichtereinheit und Traktionsmotoreinheit durch ein Hochspannungskabel. Bevorzugt sind die Kabel zwischen Transformationseinheit und Stromrichtereinheit oder Traktionsmotoreinheit und Stromrichtereinheit im unteren Bereich des Wagenkastens oder unterhalb des Wagenkastens verlegt

Das Verfahren kann weiterhin den Schritt
- Bereitstellen eines Führungsstands an dem zweiten Wagenkastenende,
umfassen.

Bevorzugt sind der Stromrichtereinheit weiterer Zusatzausrüstungen, insbesondere elektrische Zusatzausrüstungen räumlich zugeordnet, wie beispielsweise Hilfsbetriebeumrichter.

Die Erfindung wie im Folgenden anhand von Ausführungsbeispielen in Figuren weiter erläutert. Hierbei zeigt:
- Figur 1:: Eine schematische Darstellung einer ersten Ausführungsform eines Schienenfahrzeugs,
- Figur 2:: Eine schematische, nicht erfindungsgemässe Darstellung einer zweiten Ausführungsform eines Schienenfahrzeugs,
- Figur 3:: Ein detailliertes Schaltschema eines Schienenfahrzeugs gemäss Figur 2,
- Figur 4:: Eine schematische Darstellung einer Draufsicht auf eine dritte Ausführungsform eines nicht-erfindungsgemässen Schienenfahrzeuges,
- Figur 5:: Eine schematische Darstellung einer nicht erfindungsgemässen Ausführungsform eines Schienenfahrzeugs,
- Figur 6:: Eine schematische Darstellung einer zweiten alternativen Ausführungsform eines Schienenfahrzeugs,
- Figur 7:: Eine schematische Darstellung einer Draufsicht auf eine dritte alternativen Ausführungsform eines erfindungsgemässen Schienenfahrzeuges.

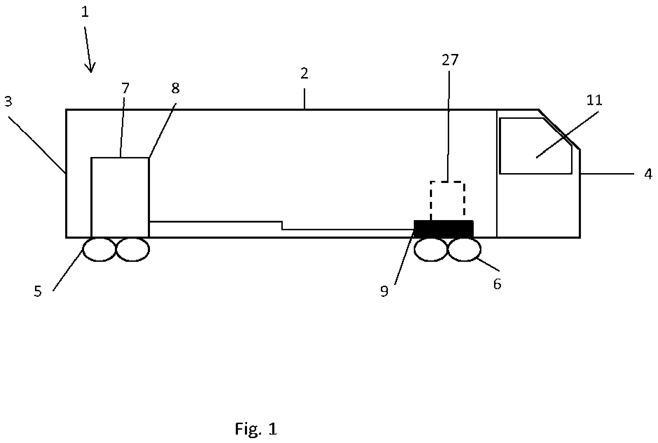

Figur 1 zeigt eine schematische Darstellung eines Schienenfahrzeugs in einer ersten Ausführungsform. Das Schienenfahrzeug 1 umfasst einen Wagenkasten 2 mit einem ersten Wagenkastenende 3 und einem zweiten Wagenkastenende 4. Das erste Wagenkastenende 3 ist auf einer ersten Radeinheit 5 abgestützt, wobei das zweite Wagenkastenende 4 auf einer zweiten Radeinheit 6 abgestützt ist. Im Bereich der ersten Radeinheit 5 sind eine primäre Transformatoreinheit 7 und eine primäre Stromrichtereinheit 8 angeordnet. Die primäre Stromrichtereinheit 8 ist über ein Kabel mit der primären Traktionsmotoreinheit 9 verbunden. Die primäre Traktionsmotoreinheit 9 ist im Bereich der zweiten Radeinheit 6 angeordnet. Optional kann im Bereich der zweiten Radeinheit 6 ein Energiespeicher 27 in Form einer Batterie oder eines Supercap angeordnet sein. Das zweite Wagenkastenende 4 umfasst weiterhin einen Führerstand 11. Ein Führerstand 11 hat üblicherweise ein hohes Gewicht, sodass dies ein Gegengewicht zur schweren primären Transformatoreinheit 7 darstellt. Bei dem Wagenkasten 2 kann es sich im einen Doppelstock oder einen Einzelstockwagen handeln.

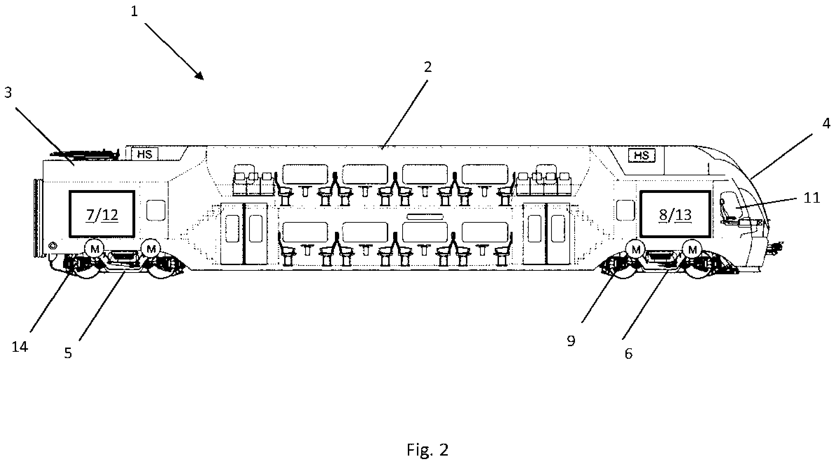

Figur 2 zeigt eine schematische, nicht erfindungsgemässe Darstellung einer zweiten Ausführungsform eines Schienenfahrzeugs 1. Das Schienenfahrzeug 1 weist einen Wagenkasten 2 auf, der ein erstes Wagenkastenende 3 und ein zweites Wagenkastenende 4 umfasst. Der Wagenkasten 2 ist als Doppelstockwagenkasten ausgebildet. Das erste Wagenkastenende 3 liegt auf einer ersten Radeinheit 5 auf, wobei das zweite Wagenkastenende 4 auf einer zweiten Radeinheit 6 aufliegt. Die zweite Radeinheit 6 umfasst eine primäre Traktionsmotoreinheit 9, die aus zwei Traktionsmotoren besteht. Die primäre Traktionsmotoreinheit 9 wird durch die primäre Stromrichtereinheit 8 mit Energie versorgt. Die primäre Stromrichtereinheit 8 ist daher mit einem Kabel mit der primären Traktionsmotoreinheit 9 verbunden. Das Kabel ist vorteilhafterweise im unteren Bereich des Wagenkastens 2 verlegt. Die primäre Stromrichtereinheit 8 ist ausserdem mit der primären Transformatoreinheit 7 verbunden, wobei die primäre Transformatoreinheit 7 im Bereich der ersten Radeinheit 5 angeordnet ist. Am zweiten Wagenkastenende 4 ist im Bereich der zweiten Radeinheit 6 eine sekundäre Transformatoreinheit 13 angeordnet. Die sekundäre Stromrichtereinheit 12 im Bereich der ersten Radeinheit 5 ist über ein Kabel mit der sekundären Traktionsmotoreinheit 14 im Bereich der ersten Radeinheit 5 verbunden. Der Wagenkasten 2 umfasst weiterhin einen Führerstand 11 am zweiten Wagenkastenende 4.

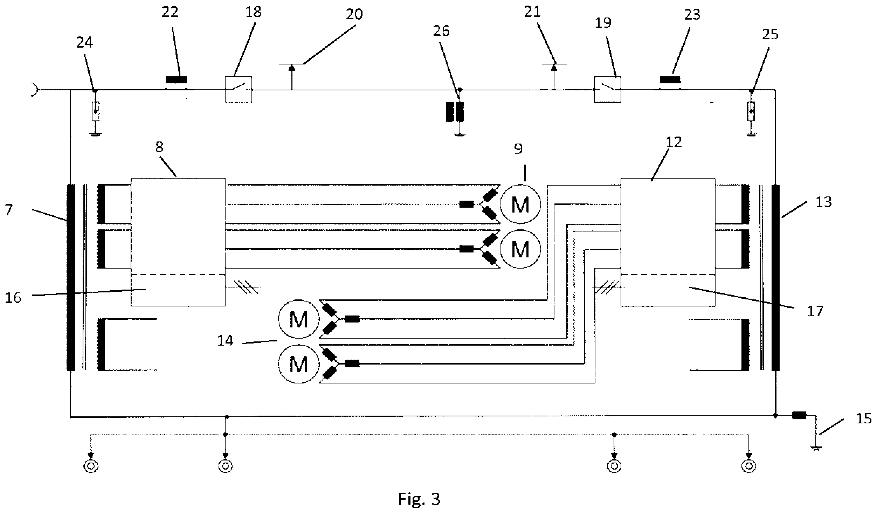

Figur 3 zeigt eine schematische Schaltungsdarstellung eines Schienenfahrzeuges 1 gemäss Figur 2. Eine primäre Transformatoreinheit 7 ist mit einer primären Stromrichtereinheit 8 verbunden. Die primäre Stromrichtereinheit versorgt die primäre Traktionsmotoreinheit 9 mit Energie. Die primäre Traktionsmotoreinheit 9 umfasst zwei Traktionsmotoren M. Der primären Stromrichtereinheit 8 ist ausserdem eine primäre Hilfsbetriebeumrichtereinheit 16 zugeordnet und mit dieser über ein Kabel verbunden. Eine sekundäre Stromrichtereinheit 12 versorgt die sekundäre Traktionsmotoreinheit 14 mit Energie. Die sekundäre Traktionsmotoreinheit 14 umfasst ebenfalls zwei Traktionsmotoren M. Die sekundäre Stromrichtereinheit 12 ist mit der sekundären Transformatoreinheit 13 verbunden. Weiterhin ist der sekundären Stromrichtereinheit 12 eine sekundäre Hilfsbetriebeumrichtereinheit 17 räumlich zugeordnet und mit dieser über ein Kabel verbunden. Die Energieversorgung wird durch den ersten Pantographen 20 und dem zweiten Pantographen 21 erzielt. Selbstverständlich ist auch ein Pantograph ausreichend. Dem ersten Pantographen 20 ist ein erster Hauptschalter 18 und ein erster Stromstärke-Messumformer 22 zugeordnet. Ausserdem ist dem Pantographen 20 ein erster Überspannungsschutz 24 zugeordnet. Dem zweiten Pantographen 21 sind analog ein zweiter Hauptschalter 19, ein zweiter Stromstärke-Messumformer 23 sowie ein zweiter Überspannungsschutz 25 zugeordnet. Zusätzlich umfasst der Stromkreis einen Spannungswandler 26 und eine Erdung 15.

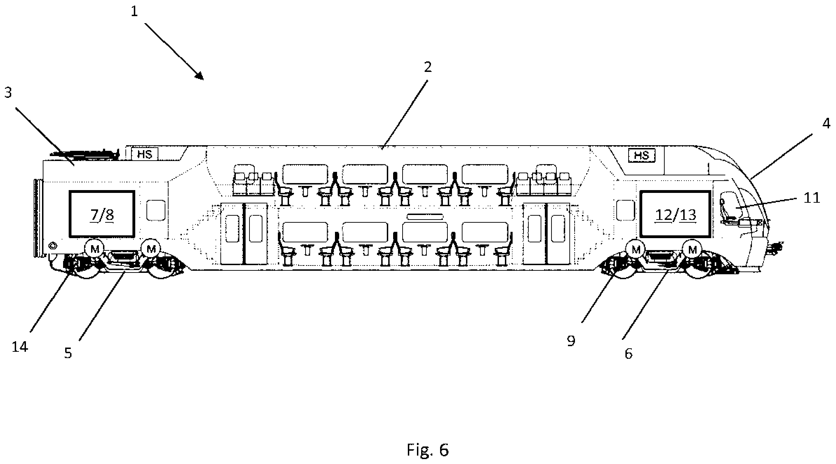

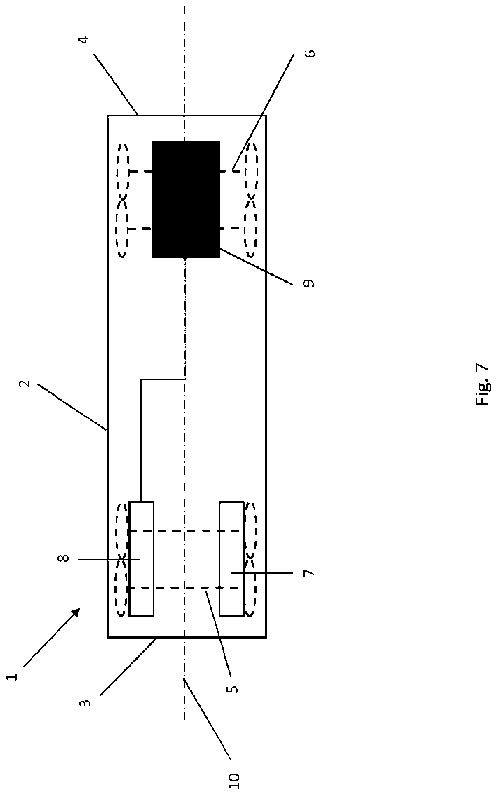

Figur 7 zeigt eine schematische Darstellung einer Draufsicht auf eine weitere Ausführungsform eines erfindungsgemässen Schienenfahrzeugs 1. Das Schienenfahrzeug 1 umfasst einen Wagenkasten 2, der an einem Wagenkastenende 3 auf eine erste Radeinheit 5 und an einem zweiten Wagenkastenende 4 auf einer zweiten Radeinheit 6 abgestützt ist. Der Wagenkasten 2 umfasst eine Längsachse 10. Eine primäre Transformatoreinheit 7 ist im Bereich der ersten Radeinheit 5 angeordnet. Eine primäre Stromrichtereinheit 8 ist ebenfalls im Bereich der ersten Radeinheit 5 angeordnet. Die primäre Transformatoreinheit 7 ist auf einer anderen Seite der Längsachse 10 angeordnet als die primäre Stromrichtereinheit 8. Somit ist das Gewicht auch in Querrichtung möglichst gleichmässig verteilt. Eine primäre Traktionsmotoreinheit 9 ist im Bereich der zweiten Radeinheit 6 angeordnet und wird über ein Kabel mit Energie von der primären Stromrichtereinheit 8 versorgt. Für den Fall, dass die primäre Traktionsmotoreinheit 9 zwei Motoren umfasst, können auch diese beidseitig der Längsachse gegenüber angeordnet sein. Eine derartige Ausführungsform lässt sich leicht und modular durch eine zweite Antriebsanordnung analog zu Fig. 6 erweitern.

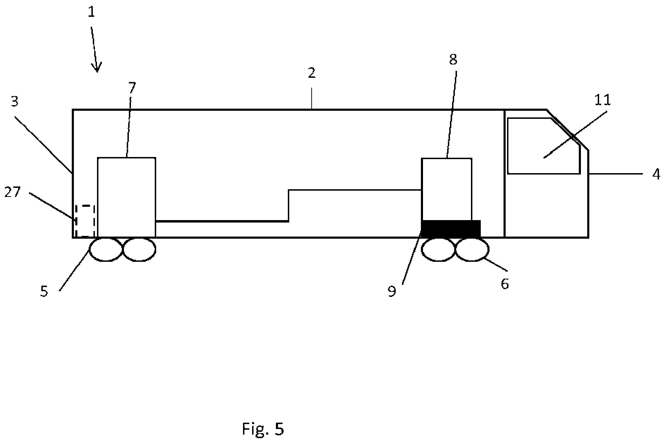

Figur 5 zeigt eine schematische Darstellung eines Schienenfahrzeugs in einer nicht-erfindungsgemässen Ausführungsform. Das Schienenfahrzeug 1 umfasst einen Wagenkasten 2 mit einem ersten Wagenkastenende 3 und einem zweiten Wagenkastenende 4. Das erste Wagenkastenende 3 ist auf einer ersten Radeinheit 5 abgestützt, wobei das zweite Wagenkastenende 4 auf einer zweiten Radeinheit 6 abgestützt ist. Im Bereich der ersten Radeinheit 5 ist eine primäre Transformatoreinheit 7 angeordnet. Eine primäre Stromrichtereinheit 8 ist im Bereich der zweiten Radeinheit 6 über ein Kabel mit der primären Traktionsmotoreinheit 9 verbunden. Die primäre Traktionsmotoreinheit 9 ist im Bereich der zweiten Radeinheit 6 angeordnet. Optional kann im Bereich der zweiten Radeinheit 6 oder der ersten Radeinheit 5 ein Energiespeicher 27 in Form einer Batterie oder eines Supercap angeordnet sein. Das zweite Wagenkastenende 4 umfasst weiterhin einen Führerstand 11. Ein Führerstand 11 hat üblicherweise ein hohes Gewicht, sodass dies ein Gegengewicht zur schweren primären Transformatoreinheit 7 darstellt. Die Anordnung von Stromrichtereinheit 8 und Traktionsmotoreinheit 9 auf der Seite des Führerstandes 11 optimiert weiterhin die Seitenwindstabilität. Bei dem Wagenkasten 2 kann es sich im einen Doppelstock oder einen Einzelstockwagen handeln.

Figur 6 zeigt eine schematische Darstellung einer zweiten alternativen Ausführungsform eines Schienenfahrzeugs 1. Das Schienenfahrzeug 1 weist einen Wagenkasten 2 auf, der ein erstes Wagenkastenende 3 und ein zweites Wagenkastenende 4 umfasst. Der Wagenkasten 2 ist als Doppelstockwagenkasten ausgebildet. Das erste Wagenkastenende 3 liegt auf einer ersten Radeinheit 5 auf, wobei das zweite Wagenkastenende 4 auf einer zweiten Radeinheit 6 aufliegt. Die zweite Radeinheit 6 umfasst eine primäre Traktionsmotoreinheit 9, die aus zwei Traktionsmotoren besteht. Die primäre Traktionsmotoreinheit 9 wird durch die primäre Stromrichtereinheit 8 mit Energie versorgt. Die primäre Stromrichtereinheit 8 ist daher mit einem Kabel mit der primären Traktionsmotoreinheit 9 verbunden. Die primäre Stromrichtereinheit 8 ist ausserdem mit der primären Transformatoreinheit 7 verbunden, wobei die primäre Transformatoreinheit 7 und die primäre Stromrichtereinheit 8 im Bereich der ersten Radeinheit 5 angeordnet sind. Am zweiten Wagenkastenende 4 ist im Bereich der zweiten Radeinheit 6 eine sekundäre Transformatoreinheit 13 angeordnet. Die sekundäre Stromrichtereinheit 12 ist über ein Kabel mit der sekundären Traktionsmotoreinheit 14 im Bereich der ersten Radeinheit 5 verbunden. Der Wagenkasten 2 umfasst weiterhin einen Führerstand 11 am zweiten Wagenkastenende 4.

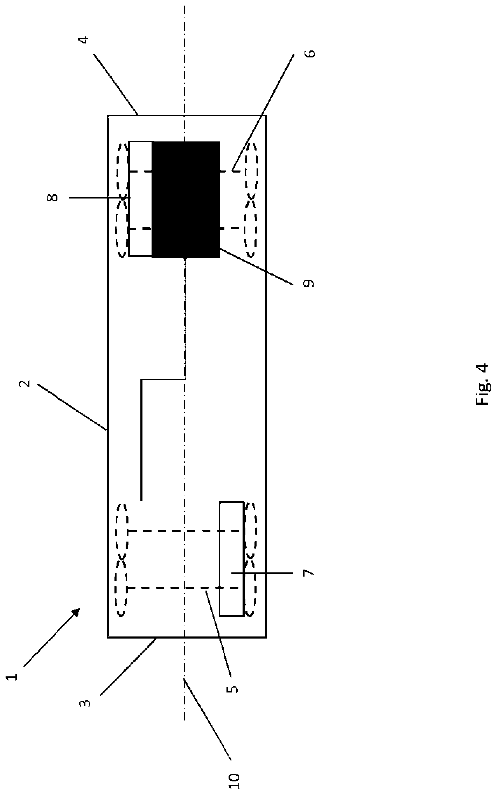

Figur 4 zeigt eine schematische Darstellung einer Draufsicht auf ein nicht-erfindungsgemässen Schienenfahrzeugs 1. Das Schienenfahrzeug 1 umfasst einen Wagenkasten 2, der an einem Wagenkastenende 3 auf eine erste Radeinheit 5 und an einem zweiten Wagenkastenende 4 auf einer zweiten Radeinheit 6 abgestützt ist. Der Wagenkasten 2 umfasst eine Längsachse 10. Eine primäre Transformatoreinheit 7 ist im Bereich der ersten Radeinheit 5 angeordnet. Eine primäre Stromrichtereinheit 8 ist im Bereich der zweiten Radeinheit 6 angeordnet. Die primäre Transformatoreinheit 7 ist auf einer anderen Seite der Längsachse 10 angeordnet als die primäre Stromrichtereinheit 8. Somit ist das Gewicht auch in Querrichtung möglichst gleichmässig verteilt. Eine primäre Traktionsmotoreinheit 9 ist im Bereich der zweiten Radeinheit 6 angeordnet und wird über ein Kabel mit Energie von der primären Stromrichtereinheit 8 versorgt. Für den Fall, dass die primäre Traktionsmotoreinheit 9 zwei Motoren umfasst, können auch diese beidseitig der Längsachse gegenüber angeordnet sein. Eine derartige Ausführungsform lässt sich leicht und modular durch eine zweite Antriebsanordnung analog zu Fig. 2 erweitern.

## Patentansprüche

1. Schienenfahrzeug (1) umfassend zumindest einen Wagenkasten (2), wobei der Wagenkasten (2) zwei Wagenkastenenden (3,4) aufweist und im Bereich der Wagenkastenenden (3,4) jeweils auf einer Radeinheit (5,6) abgestützt ist, wobei zumindest eine Radeinheit (5,6) antreibbar ausgebildet ist, und eine Antriebsanordnung, wobei die Antriebsanordnung zumindest eine Transformatoreinheit (7), zumindest eine Traktionsmotoreinheit (9) und zumindest eine Stromrichtereinheit (8) umfasst und eine primäre Transformatoreinheit (7) im Bereich der ersten Radeinheit (5) angeordnet ist, **dadurch gekennzeichnet, dass** eine primäre Transformatoreinheit (7) und eine primäre Stromrichtereinheit (8) im Bereich der ersten Radeinheit (5) angeordnet sind, wobei die primäre Transformatoreinheit (7) und die primäre Stromrichtereinheit (8) mit der zweiten Radeinheit (6) derartig verbunden sind, dass die primäre Traktionsmotoreinheit (9) im Bereich der zweiten Radeinheit (6) durch die primäre Transformatoreinheit (7) und die primäre Stromrichtereinheit (8) antreibbar sind.

2. Schienenfahrzeug (1) nach Anspruch 1, **dadurch gekennzeichnet, dass** das Schienenfahrzeug (1) eine Längsachse (10) umfasst und eine primäre Transformatoreinheit (7) auf einer ersten Seite der Längsachse (10) angeordnet ist und die primäre Stromrichtereinheit (8) auf einer zweiten Seite der Längsachse (10) angeordnet ist.

3. Schienenfahrzeug (1) nach einem der vorhergehenden Ansprüche, **dadurch gekennzeichnet, dass** der Wagenkasten (2) an einem zweiten Wagenkastenende (4) einen Führerstand (11) umfasst und die zweite Radeinheit (6) im Bereich des zweiten Wagenkastenendes (4) angeordnet ist.

4. Schienenfahrzeug (1) nach einem der vorhergehenden Ansprüche, **dadurch gekennzeichnet, dass** eine sekundäre Stromrichtereinheit (12) und eine sekundäre Transformatoreinheit (13) im Bereich der zweiten Radeinheit angeordnet sind.

5. Schienenfahrzeug (1) nach Anspruch 4, **dadurch gekennzeichnet, dass** die sekundäre Stromrichtereinheit (12) und die sekundäre Transformatoreinheit (13) eine sekundäre Traktionsmotoreinheit (14) der ersten Radeinheit (5) antreiben.

6. Schienenfahrzeug (1) nach einem der vorhergehenden Ansprüche, **dadurch gekennzeichnet, dass** der Wagenkasten(2) als Doppelstockwagenkasten ausgebildet ist.

7. Schienenfahrzeug (1) nach einem der vorhergehenden Ansprüche, **dadurch gekennzeichnet**, das die Antriebsanordnung eine Energiespeichereinheit (15) umfasst.

8. Verfahren zum Antreiben eines Schienenfahrzeugs (1), insbesondere gemäss einem der Ansprüche 1 bis 7, umfassend einen Wagenkasten (2) mit zwei Wagenkastenenden (3,4) und im Bereich der Wagenkastenenden (3,4) jeweils eine Radeinheit (5,6) **dadurch gekennzeichnet, dass** eine primäre Traktionsmotoreinheit (9) einer zweiten Radeinheit (6) an einem zweiten Wagenkastenende (4) durch eine primäre Stromrichtereinheit (8) und eine primäre Transformatoreinheit (7) an einem ersten Wagenkastenende (3) im Bereich der ersten Radeinheit (5) mit Energie versorgt werden.

9. Verfahren nach Anspruch 8, **dadurch gekennzeichnet, dass** eine sekundäre Traktionsmotoreinheit (14) einer ersten Radeinheit (5) an einem ersten Wagenkastenende (3) durch eine sekundäre Stromrichtereinheit (12) und eine sekundäre Transformationseinheit (13) am zweiten Wagenkastenende (4) mit Energie versorgt werden.

10. Verfahren zur Herstellung eines Schienenfahrzeugs, insbesondere eines Schienenfahrzeugs gemäss einem der Ansprüche 1 bis 7, umfassend die Schritte
- Bereitstellen eines Wagenkastens (2) mit zwei Wagenkastenenden (3,4), wobei jedes Wagenkastenende (3,4) auf einer Radeinheit (5,6) abgestützt ist,
- Bereitstellen einer primären Stromrichtereinheit (8) und einer primären Transformationseinheit (7) an einem ersten Wagenkastenende (3) im Bereich der ersten Radeinheit (5),
- Bereitstellen zumindest einer primären Traktionsmotoreinheit (9) an einer zweiten Radeinheit (6) am zweiten Wagenkastenende (4),
- Verbinden der primären Transformationseinheit (7) mit der primären Stromrichtereinheit (8)
- Verbinden der primären Stromrichtereinheit (8) mit der zumindest einen primären Traktionsmotoreinheit (9) an der zweiten Radeinheit (6).

11. Verfahren nach Anspruch 10 umfassend die Schritte
- Bereitstellen einer sekundären Stromrichtereinheit (12) und einer sekundären Transformatoreinheit (13) an einem zweiten Wagenkastenende (4) im Bereich der zweiten Radeinheit (6),
- Bereitstellen zumindest einer sekundären Traktionsmotoreinheit (14) an einer ersten Radeinheit (5) am ersten Wagenkastenende (3),
- Verbinden der sekundären Transformationseinheit (13) mit der sekundären Stromrichtereinheit (12),
- Verbinden der sekundären Stromrichtereinheit (12) mit der zumindest einen sekundären Traktionsmotoreinheit (14) an der ersten Radeinheit (5).

12. Verfahren nach einem der Ansprüche 10 bis 11, umfassend den Schritt
- Bereitstellen einer Führerkabine (11) an dem zweiten Wagenkastenende (4).

## Claims

1. A rail vehicle (1) comprising at least one coach body (2), wherein the coach body (2) has two coach body ends (3, 4) and is supported in the region of the coach body ends (3, 4) in each case on a wheel unit (5, 6), wherein the wheel unit is either a conventional bogie or a Jacob's bogie, and wherein at least one wheel unit (5, 6) is designed to be drivable, and a drive arrangement, the drive arrangement comprising at least one transformer unit (7), at least one traction motor unit (9) and at least one converter unit (8), and a primary transformer unit (7) being arranged in the region of the first wheel unit (5), **characterized in that** a primary transformer unit (7) and a primary converter unit (8) are arranged in the region of the first wheel unit (5), wherein the primary transformer unit (7) and the primary converter unit (8) are connected to the second wheel unit (6) in such a way that the primary traction motor unit (9) can be driven in the region of the second wheel unit (6) by the primary transformer unit (7) and the primary converter unit (8).

2. A rail vehicle (1) according to claim 1, **characterized in that** the rail vehicle (1) comprises a longitudinal axis (10) and a primary transformer unit (7) is arranged on a first side of the longitudinal axis (10) and the primary converter unit (8) is arranged on a second side of the longitudinal axis (10).

3. A rail vehicle (1) according to one of the preceding claims, **characterised in that** the coach body (2) comprises a driver's cabin (11) at a second coach body end (4) and the secend wheel unit (6) is arranged in the region of the second coach body end (4).

4. A rail vehicle (1) according to one of the preceding claims, **characterized in that** a secondary converter unit (12) and a secondary transformer unit (13) are arranged in the area of the second wheel unit.

5. A rail vehicle (1) according to claim 4, **characterized in that** the secondary converter unit (12) and the secondary transformer unit (13) drive a secondary traction motor unit (14) of the first wheel unit (5).

6. Rail vehicle (1) according to one of the preceding claims, **characterised in that** the coach body (2) is designed as a double-decker coach body.

7. A rail vehicle (1) according to any of the preceding claims, **characterized in that** the drive arrangement comprises an energy storage unit (15).

8. A method of driving a rail vehicle (1), in particular according to one of claims 1 to 7, comprising a coach body (2) with two coach body ends (3, 4) and, in the region of the coach body ends (3, 4), a wheel unit (5, 6) in each case, the wheel unit being either a conventional bogie or a Jacob's bogie, **characterised in that in that** a primary traction motor unit (9) of a second wheel unit (6) at a second end (4) of the coach body is supplied with energy by a primary converter unit (8) and a primary transformer unit (7) at a first end (3) of the coach body in the region of the first wheel unit (5).

9. Method according to claim 8, **characterized in that** a secondary traction motor unit (14) of a first wheel unit (5) at a first end (3) of the coach body is supplied with power by a secondary converter unit (12) and a secondary transformation unit (13) at the second end (4) of the coach body.

10. A method for manufacturing a rail vehicle, in particular a rail vehicle according to one of claims 1 to 7, comprising the steps of
- Providing a coach body (2) with two coach body ends (3, 4), each coach body end (3, 4) being supported on a wheel unit (5, 6),
- Providing a primary converter unit (8) and a primary transformation unit (7) at a first coach body end (3) in the area of the first wheel unit (5),
- Providing at least one primary traction motor unit (9) on a second wheel unit (6) at the second end of the coach body (4),
- Connecting the primary transformation unit (7) to the primary converter unit (8)
- Connecting the primary converter unit (8) to the at least one primary traction motor unit (9) on the second wheel unit (6).

11. Method according to claim 10 comprising the steps
- Providing a secondary converter unit (12) and a secondary transformer unit (13) at a second end (4) of the coach body in the area of the second wheel unit (6),
- Providing at least one secondary traction motor unit (14) on a first wheel unit (5) at the first end of the coach body (3),
- Connecting the secondary transformation unit (13) to the secondary converter unit (12),
- Connecting the secondary converter unit (12) to the at least one secondary traction motor unit (14) on the first wheel unit (5).

12. A method according to any one of claims 10 to 11, comprising the step
- Providing a driver's cab (11) at the second end of the coach body (4).

## Revendications

1. Véhicule ferroviaire (1) comprenant au moins une caisse (2), la caisse (2) présentant deux extrémités de caisse (3, 4) et s'appuyant dans la zone des extrémités de caisse (3, 4) à chaque fois sur une unité de roue (5, 6), l'unité de roue est un bogie classique ou un bogie de Jacob, et au moins une unité de roue (5, 6) étant conçue de manière à pouvoir être entraînée, et un dispositif d'entraînement, le dispositif d'entraînement comprenant au moins une unité de transformateur (7), au moins une unité de moteur de traction (9) et au moins une unité de convertisseur (8), et une unité de transformateur primaire (7) étant disposée dans la région de la première unité de roue (5), **caractérisé en ce que** une unité de transformateur primaire (7) et une unité de convertisseur primaire (8) sont disposées dans la zone de la première unité de roue (5), dans lequel l'unité de transformateur primaire (7) et l'unité de convertisseur primaire (8) sont reliées à la deuxième unité de roue (6) de telle sorte que l'unité de moteur de traction primaire (9) peut être entraînée dans la région de la deuxième unité de roue (6) par l'unité de transformateur primaire (7) et l'unité de convertisseur primaire (8).

2. Véhicule ferroviaire (1) selon la revendication 1, **caractérisé en ce que** le véhicule ferroviaire (1) comprend un axe longitudinal (10) et une unité de transformateur primaire (7) est disposée sur un premier côté de l'axe longitudinal (10) et l'unité de convertisseur primaire (8) est disposée sur un deuxième côté de l'axe longitudinal (10).

3. Véhicule ferroviaire (1) selon l'une des revendications précédentes, **caractérisé en ce que** la caisse (2) comprend une cabine de conduite (11) à une deuxième extrémité de la caisse (4) et la deuxième unité de roue (6) est disposée dans la région de la deuxième extrémité de la caisse (4).

4. Véhicule ferroviaire (1) selon l'une des revendications précédentes, **caractérisé en ce qu'**une unité de convertisseur secondaire (12) et une unité de transformateur secondaire (13) sont disposées dans la zone de la deuxième unité de roue.

5. Véhicule ferroviaire (1) selon la revendication 4, **caractérisé en ce que** l'unité de convertisseur secondaire (12) et l'unité de transformateur secondaire (13) entraînent une unité de moteur de traction primaire (14) de la première unité de roue (5).

6. Véhicule ferroviaire (1) selon l'une des revendications précédentes, **caractérisé en ce que** la caisse (2) est conçue comme une caisse à deux étages.

7. Véhicule ferroviaire (1) selon l'une des revendications précédentes, **caractérisé en ce que** le dispositif d'entraînement comprend une unité de stockage d'énergie (15).

8. Méthode de conduite d'un véhicule ferroviaire (1), en particulier selon l'une des revendications 1 à 7, comprenant une caisse (2) avec deux extrémités de caisse (3, 4) et, dans la région des extrémités de caisse (3, 4), une unité de roue (5, 6) dans chaque cas, l'unité de roue étant soit un bogie conventionnel soit un bogie de Jacob, **caractérisé en ce qu'**une unité de moteur de traction primaire (9) d'une deuxième unité de roue (6) à une deuxième extrémité (4) de la caisse est alimentée en énergie par une unité de convertisseur primaire (8) et une unité de transformateur primaire (7) à une première extrémité (3) de la caisse dans la région de la première unité de roue (5).

9. Méthode selon la revendication 8, **caractérisée en ce qu'**une unité de moteur de traction primaire (14) d'une première unité de roue (5) à une première extrémité (3) de la caisse est alimentée en énergie par une unité de convertisseur secondaire (12) et une unité de transformation secondaire (13) à la deuxième extrémité (4) de la caisse.

10. Méthode de fabrication d'un véhicule ferroviaire, en particulier d'un véhicule ferroviaire selon l'une des revendications 1 à 7, comprenant les étapes suivantes
- Mise à disposition d'une caisse (2) avec deux extrémités de caisse (3, 4), chaque extrémité de caisse (3, 4) étant supportée par une unité de roue (5, 6),
- Mise à disposition d'une unité de convertisseur primaire (8) et une unité de transformation primaire (7) à une première extrémité de la carrosserie (3) dans la zone de la première unité de roue (5),
- Mise à disposition d'au moins une unité de traction primaire (9) sur une deuxième unité de roue (6) à la deuxième extrémité de la caisse (4),
- Mise à disposition de l'unité de transformation primaire (7) à l'unité de convertisseur primaire (8)
- Connexion de l'unité de convertisseur primaire (8) à au moins une unité de traction primaire (9) sur la deuxième unité de roue (6).

11. Méthode selon la revendication 10, comprenant les étapes suivantes
- Mise à disposition d'une unité de convertisseur secondaire (12) et une unité de transformateur secondaire (13) à une deuxième extrémité (4) de la caisse dans la zone de la deuxième unité de roue (6),
- Mise à disposition d'au moins une unité de traction primaire secondaire (14) sur une première unité de roue (5) à la première extrémité de la caisse (3),
- Connexion de l'unité de transformation secondaire (13) à l'unité de convertisseur secondaire (12),
- Connexion de l'unité de convertisseur secondaire (12) à au moins une unité de traction primaire secondaire (14) sur la première unité de roue (5).

12. Une méthode selon l'une des revendications 10 à 11, comprenant l'étape
- Mise à disposition d'une cabine de conduite (11) à la deuxième extrémité de la caisse (4).
